# EUROPÄISCHE PATENTANMELDUNG

(11) **EP 1 044 595 A1**
(43) Veröffentlichungstag der Anmeldung: **18.10.2000**
(21) Anmeldenummer: 00104988.1
(22) Anmeldetag: 09.03.2000
(51) Int. Cl.: A01D 61/00, A01D 41/14

(54) **Förderzusammenbau**

(30) Priorität: 14.04.1999 DE 19916645
(71) Anmelder: DEERE & COMPANY, Moline, Illinois 61265-8098 (US)
(72) Erfinder: Emmert, Walter, 66497 Contwig (DE)
(74) Vertreter: Holst, Sönke, Dr.

(57) **Zusammenfassung**

Die Erfindung bezieht sich auf einen Fördererzusammenbau (38), mit einer ersten Fördereinrichtung (66) zum Transportieren von Erntegut, einer stromabwärts der ersten Fördereinrichtung angeordneten zweiten Fördereinrichtung, und einer einer Befestigungseinrichtung (54) zur Anbringung eines Erntevorsatzes (74). Um einem optimalen Übergang des Ernteguts vom Erntevorsatz (74) auf die erste Fördereinrichtung (66) zu erreichen, wird vorgeschlagen, daß die Befestigungseinrichtung (54) um eine wenigstens näherungsweise koaxial zur Achse der ersten Fördereinrichtung (66) verlaufenden Achse (64) schwenkbar am Fördererzusammenbau (38) befestigt ist.

## Beschreibung

Die Erfindung betrifft einen Fördererzusammenbau mit einer Befestigungseinrichtung zur Anbringung eines Erntevorsatzes.

Im Stand der Technik sind Fördererzusammenbauten bekannt, bei denen - durch den Wunsch, unterschiedliche Bereifungen an einer Erntemaschine zu verwenden oder durch einen Wegfall der Bodengruppenverstellung bedingt - eine vertikale Schwenkverstellung in den Fördererzusammenbau oder den Zuführkanal integriert worden ist, um einen Erntevorsatz um eine horizontale, quer zur Vorwärtsfahrtrichtung der Erntemaschine verlaufende Achse verschwenken zu können. Auf diese Weise kann jederzeit eine schnelle Anpassung an die Konturen des Erdbodens durchgeführt werden.

In der EP 685 147 A wird vorgeschlagen, das Gehäuse eines Schrägförderers zweiteilig herzustellen und die Schwenkachse zwischen beiden Gehäusehälften am Boden des Schrägförderers anzuordnen. Als nachteilig ist anzusehen, daß der erzielbare Schwenkwinkel relativ gering ist, und daß Erntegut in den Spalt zwischen beiden Gehäusehälften eindringen kann.

In der DE 43 24 766 A ist ein Schrägförderer mit einem frontseitig befestigten Pendelschild offenbart, der um eine horizontal und quer zur Vorwärtsfahrtrichtung verlaufende Achse schwenkbar am Schrägförderer angebracht ist. Die Schwenkachse ist an der Unterseite des Schrägförderers angeordnet.

Die DE 23 02 499 A schlägt einen Schrägförderer vor, bei dem ein pendelschild durch entsprechende Hydraulikzylinder in etwa vertikaler Richtung verfahren, jedoch nicht verschwenkt wird. Bei diesem Schrägförderer ist, wie auch bei dem in der DE 43 24 766 A beschriebenen, als nachteilig anzusehen, daß der Übergang des Ernteguts vom Erntevorsatz, insbesondere einer darin angeordneten Schnecke, auf den Schrägförderer nicht immer optimal ist, da sich der Abstand zwischen Schnecke und Schrägförderer in Abhängigkeit vom Schwenkwinkel (bzw. Höhe des Pendelschilds) ändert.

Aus der EP 448 844 A und der DE 30 41 203 A ist ein Förderergehäuse bekannt, an dem ein Pendelschild um eine Achse schwenkbar ist, die in etwa koaxial mit der Achse einer vorderen Walze eines Kettenförderers angeordnet ist. Auch hier ist kein optimaler Übergang des Ernteguts vom Erntevorsatz auf den Kettenförderer möglich, da der Kettenförderer hinreichend weit von der Schnecke des Erntevorsatzes beabstandet sein muß, um einen ausreichenden Schwenkwinkelbereich zu ermöglichen.

Das der Erfindung zugrunde liegende Problem wird darin gesehen, die bekannten Fördererzusammenbauten dahingehend weiterzuentwickeln, daß sie flexibel einsetzbar sind und einen optimalen Übergang des Ernteguts vom Erntevorsatz auf die Fördereinrichtung des Fördererzusammenbaus ermöglichen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke der Erfindung besteht darin, eine erste Fördereinrichtung und eine zweite Fördereinrichtung, die bezüglich des Stroms geförderten Ernteguts stromabwärts der ersten Fördereinrichtung positioniert ist, vorzusehen, und die Befestigungseinrichtung, an der der Erntevorsatz angebracht werden kann (bzw. ist), um eine Achse schwenkbar zu gestalten, die zumindest näherungsweise mit der Achse der ersten Fördereinrichtung koaxial ist, oder mit dieser Achse übereinstimmt. Die erfindungsgemäß vorgesehene erste Fördereinrichtung kann in einem optimalen Abstand vom Erntevorsatz angeordnet werden, so daß der bestmögliche Transfer des geernteten Gutes vom Erntevorsatz auf die erste Fördereinrichtung möglich ist. Da die Schwenkachse der Befestigungseinrichtung mit der Achse der ersten Fördereinrichtung (zumindest näherungsweise) übereinstimmt, bleibt der Abstand zwischen der ersten Fördereinrichtung und dem Erntevorsatz - insbesondere einem darin angeordneten Schneckenförderer - stets gleich und es ist bei allen Schwenkwinkeln des Erntevorsatzes eine optimale Weiterförderung des geernteten Gutes gewährleistet. Die Befestigungseinrichtung kann ein Pendelschild umfassen, das ein Pendeln des Erntevorsatzes um die Längsachse der Erntemaschine zum Ausgleich von Bodenunebenheiten ermöglicht. Es ist aber auch eine starre Anbringung des Erntevorsatzes an der Befestigungseinrichtung denkbar.

Im Stand der Technik, wie er insbesondere aus der EP 448 403 A bekannt geworden ist, ist die Fördereinrichtung und die Befestigungseinrichtung in relativ aufwendiger Weise separat in je zwei Richtungen verschiebbar gelagert. Zur Verminderung des Aufwandes und der Herstellungskosten wird vorgeschlagen, die Befestigungseinrichtung direkt oder indirekt drehbar auf der Achse der ersten Fördereinrichtung zu lagern. Eine indirekte Lagerung kann derart erfolgen, daß die Befestigungseinrichtung auf einer Lagerung der Achse gelagert ist. Dadurch sind die Achsen der ersten Fördereinrichtung und der Befestigungseinrichtung stets koaxial, auch wenn die Achse der ersten Fördereinrichtung verschiebbar sein sollte, so daß die genannten Vorteile beim Fördern des geernteten Gutes erzielt werden.

Im konkreten wäre denkbar, die Achse der ersten Fördereinrichtung derart an einem Gehäuse des Fördererzusammenbaus zu fixieren, daß sie eine entsprechende Öffnung im Gehäuse durchdringt, und die Befestigungseinrichtung an einem über das Gehäuse des Fördererzusammenbaus überstehenden Abschnitt der Achse zu lagern. Alternativ kann die Befestigungseinrichtung an einem an der Innenseite des Gehäuses positionerten Abschnitt der Achse der ersten Fördereinrichtung gelagert sein, insbesondere an der Wandung des Gehäuses. Anzumerken ist, daß die Achse der ersten Fördereinrichtung in der Regel eine angetriebene Welle ist. In diesem Fall ist unter dem Begriff 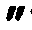 Achse" die Längsachse der Welle zu verstehen.

Die Achse der ersten Fördereinrichtung ist vorzugsweise starr, also nicht verschiebbar oder verstellbar, am Gehäuse angebracht, kann aber auch in an sich bekannter Weise in vertikaler und/oder horizontaler (Vorwärtsfahrt-) Richtung verstellbar sein. Davon unberührt ist die erste Fördereinrichtung um ihre Achse drehbar.

Die zweite Fördereinrichtung kann ein Kettenförderer sein, der eine erste und eine zweite Walze umfaßt, von denen wenigstens eine angetrieben ist, und um die eine Förderkette mit entsprechenden Mitnehmern für das geerntete Gut umläuft.

Als erste Fördereinrichtung kommt insbesondere eine Walze in Frage, die das geerntete Gut unter- oder oberschlächtig fördert. Der Vorteil einer Walze liegt in ihrer gegenüber einem Kettenförderer kürzeren Länge, die einen größeren Schwenkwinkel erlaubt, ohne daß die Befestigungseinrichtung gegen die Fördereinrichtung stößt. Zusätzlich oder alternativ ist es möglich, die erste Fördereinrichtung (bei einem vorgegebenen Schwenkwinkelbereich) näher an dem Erntevorsatz zu positionieren, was einen verbesserten Übergang des geernteten Gutes vom Erntevorsatz zum Fördererzusammenbau ermöglicht.

In einer vorteilhaften Ausführungsform der Erfindung wird als erste Fördereinrichtung eine Paddelwalze verwendet. Sie fördert das geerntete Gut effektiv und schnell vom Erntevorsatz zur zweiten Fördereinrichtung, die es in die Erntemaschine transportiert.

Weiterhin ist vorgeschlagen, eine zusätzliche Abstützung der Befestigungseinrichtung an einem Gehäuse des Fördererzusammenbaus vorzusehen, damit die Schwenkachse nicht die gesamte Last des Erntevorsatzes und der Befestigungseinrichtung aufnehmen muß. Zur Abstützung kommen insbesondere Bolzen in Frage, die in entsprechenden Schlitzen verlaufen. Die Bolzen können an der Befestigungseinrichtung angebracht sein und Schlitze im Gehäuse des Fördererzusammenbaus durchdringen, oder umgekehrt können die Bolzen am Gehäuse befestigt sein und Schlitze in der Befestigungseinrichtung durchdringen.

Der Schwenkwinkel der Befestigungseinrichtung kann durch einen oder mehrere Hydraulikzylinder oder Elektromotore oder in einfacher und preiswerter Weise mechanisch erfolgen. Für eine mechanische Verstellung ist ein Bolzen vorgeschlagen, der einenends mit der Befestigungseinrichtung verbunden ist, und anderenends eine Mutter aufweist, die mechanisch mit dem Gehäuse des Fördererzusammenbaus in Kontakt steht. Durch Drehen der Mutter auf dem Bolzen kann der Schwenkwinkel verändert werden. Es kann nur ein derartiger Bolzen an einer Seite des Gehäuses des Fördererzusammenbaus vorgesehen sein, oder es sind zwei Bolzen beidseits des Fördererzusammenbaus verwendbar. Die letztgenannte Lösung ist auch bei Bruch eines Bolzens noch betriebssicher, jedoch ist ein höherer Aufwand zur Verstellung erforderlich. Anzumerken ist, daß der Bolzen auch am Gehäuse des Fördererzusammenbaus befestigt sein kann, während die Mutter dann mechanisch mit der Befestigungseinrichtung in Kontakt steht.

Der Fördererzusammenbau kann in an sich bekannter Weise ein einteiliges Gehäuse aufweisen. Das Gehäuse kann aber auch zweiteilig sein, wobei die erste Fördereinrichtung vorzugsweise im zweiten Teil des Gehäuses angeordnet ist; dabei kann der zweite Teil ein separates Modul sein. Auch die Befestigungseinrichtung ist dann an dem Modul angebracht.

Die Erfindung ist mit allen Arten von Erntevorsätzen verwendbar, beispielsweise mit Mähvorsätzen, die insbesondere zur Getreideernte geeignet sind, Mähhäckslern (sogenannten Maisgebissen) und Pflückern, insbesondere für Mais. Der Fördererzusammenbau ist zur Verwendung an Erntemaschinen, insbesondere Mähdreschern geeignet.

Schließlich ist anzumerken, daß die Erfindung auch in einem separaten Modul realisiert werden kann. Dieses Modul wird an einem (in der Regel bereits vorhandenen) Fördererzusammenbau befestigt, und an ihm ist auch der Erntevorsatz fixierbar. Das Modul enthält eine erste Fördereinrichtung und eine Befestigungseinrichtung, an der ein Erntevorsatz angebracht werden kann (oder ist). Im Fördererzusammenbau ist in der Regel eine zweite fördereinrichtung vorhanden, die das von der ersten Fördereinrichtung transportierte Gut in eine Erntemaschine zur weiteren Verarbeitung befördert. Da die Achse der ersten Fördereinrichtung und die Schwenkachse der Befestigungseinrichtung zumindest näherungsweise koaxial sind, ist auch hier stets ein optimaler Übergang des geernteten Materials vom Erntevorsatz in den Fördererzusammenbau gewährleistet.

In der Zeichnung sind nachfolgend näher beschriebene Ausführungsbeispiele der Erfindung dargestellt. Es zeigt:
- Fig. 1: eine Erntemaschine zur Verwendung mit einem erfindungsgemäßen Fördererzusammenbau;
- Fig. 2: eine erste Ausführungsform eines Fördererzusammenbaus; und
- Fig. 3: eine zweite Ausführungsform eines Fördererzusammenbaus.

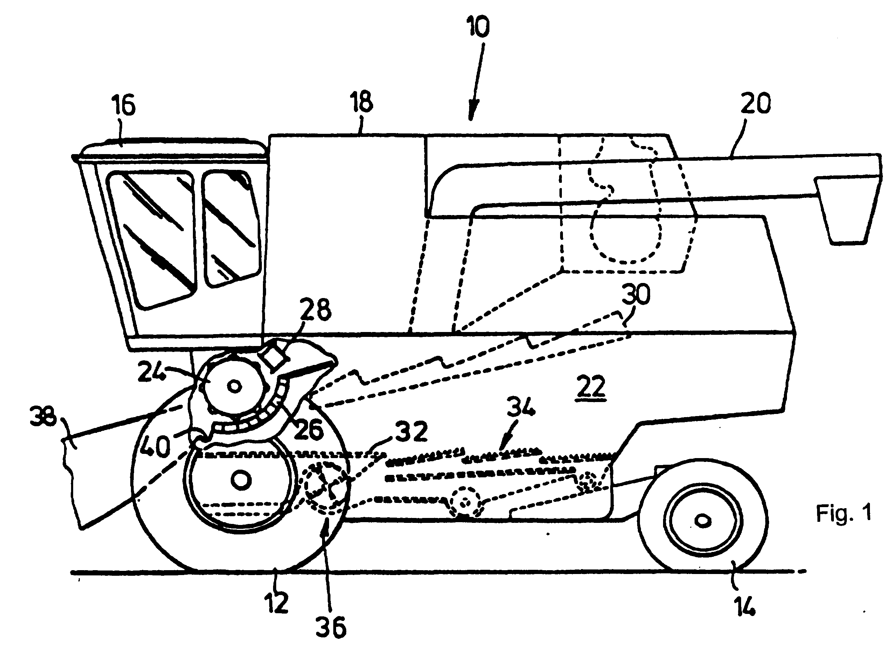

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Fördererzusammenbau 38 in Form eines Schrägförderers und eine Steinfangmulde 40 der Dreschtrommel 24 zugeführt, nachdem es von einer nicht gezeigten Erntegutbergungsvorrichtung vom Boden aufgenommen worden ist. Der Fördererzusammenbau 38 ist an der Frontseite der Erntemaschine 10 um eine horizontale, quer zur Zeichenebene verlaufende Achse schwenkbar befestigt. Er kann durch entsprechende Hydraulikzylinder, die nicht eingezeichnet sind, verschwenkt werden. Alternativ wäre auch ein starrer, nicht verschwenkbar angebrachter Fördererzusammenbau 38 möglich.

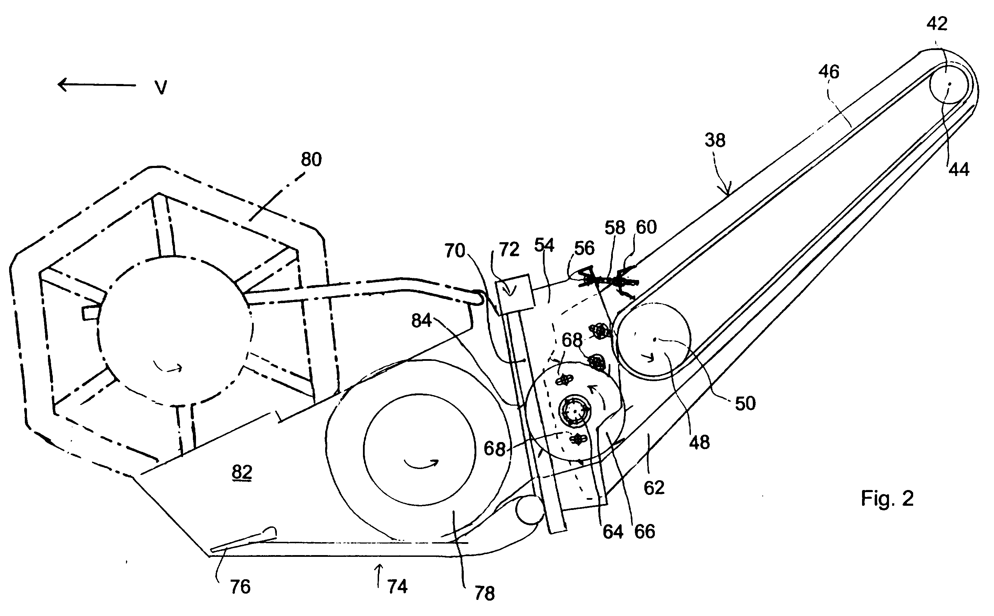

In Figur 2 ist ein Fördererzusammenbau 38 nach einer ersten Ausführungsform der Erfindung dargestellt, an dessen Frontseite ein Erntevorsatz 74 in Form eines Mähvorsatzes angebracht ist. Der Fördererzusammenbau 38 weist ein Gehäuse 62 auf. Das Gehäuse 62 enthält einen Kettenförderer mit einer oberen Fördererwalze 42, die um eine Achse 44 drehbar ist, einer unteren Fördererwalze 48, die um ihre Achse 50 drehbar ist, sowie eine um beide Walzen umlaufenden Förderkette 46 mit (nicht eingezeichneten) Mitnehmern für geerntetes Gut. Eine der Fördererwalzen 42,48 ist rotativ angetrieben und dreht sich im Gegenuhrzeigersinn, so daß geerntetes Gut zwischen der Förderkette 46 und einem Boden des Gehäuses 62 nach oben, in die Erntemaschine 10 gefördert wird. Bezüglich des-Stroms des geernteten Gutes stromaufwärts der unteren Fördererwalze 42 ist eine erste Fördereinrichtung 66 in Form einer Transportwalze mit an ihrem Außenumfang angebrachten Paddeln 84 positioniert. Die erste Fördereinrichtung 66 wird ebenfalls rotativ um eine Achse 64 angetrieben und dreht sich in Figur 2 im Gegenuhrzeigersinn. Das geerntete Gut wird somit unterschlächtig gefördert. Die Paddel 84 sind entgegen der Drehrichtung leicht geneigt, um das geerntete Gut optimal fördern zu können.

An der in Vorwärtsfahrtrichtung V vorderen, in Figur 2 links eingezeichneten Stirnfläche des Fördererzusammenbaus 38 ist eine Befestigungseinrichtung 54 positioniert. Die Befestigungseinrichtung 54 ist an ihrer Frontseite zum Erntevorsatz 74 hin offen; im allgemeinen ist eine rechteckige Öffnung vorgesehen, durch die das geerntete Gut durchtritt. Außerdem weist die Befestigungseinrichtung 54 Seitenwände auf, die an den vorderen Teilen der Außenflächen der Seitenwände des Gehäuses 62 des Fördererzusammenbaus 38 anliegen. Die Seitenwände des Gehäuses 62 erstrecken sich nicht bis zur Frontseite der Einrichtung 54, sondern enden im Abstand davon, um eine Verschwenkung der Befestigungseinrichtung 54 mit dem Erntevorsatz 74 zu ermöglichen. Die Befestigungseinrichtung 54 ist an ihren Seitenwänden um die Achse 64 der ersten Fördereinrichtung 66 drehbar gelagert. Außerdem sind Bolzen an beiden Seitenwänden des Gehäuses 62 des Fördererzusammenbaus 38 angebracht, die kreisbogenförmige Schlitze 68 in den Seitenwänden der Befestigungseinrichtung 54 durchdringen. Die Bolzen stützen die Befestigungseinrichtung 54 gegen die Gewichtskraft ab, und die Schlitze 68 begrenzen den Schwenkwinkelbereich. Der Schwenkwinkel der Befestigungseinrichtung 54 wird mechanisch durch einen Bolzen 58 mit einem Gewinde definiert, der an einem ersten Ende 56 schwenkbar an der Befestigungseinrichtung 54 angebracht ist. Der Bolzen 58 durchdringt einen mit einer entsprechenden Öffnung versehenen Träger 60, der am Gehäuse 62 des Fördererzusammenbaus 38 angeschweißt ist. Durch beidseits des Trägers 60 anliegende Muttern ist der Bolzen 58 am Träger 60 befestigt und der Schwenkwinkel festgelegt. Durch Verstellen der Muttern ist somit ein gewünschter Schwenkwinkel der Befestigungseinrichtung 54 einstellbar.

An der Frontseite der Befestigungseinrichtung 54 ist ein an sich bekannter Pendelschild 70 vorgesehen, der ein Pendeln des Erntevorsatzes 74 um die Längsachse der Erntemaschine 10 erlaubt. Der Erntevorsatz 74 weist einen sich quer zur Vorwärtsfahrtrichtung V erstreckenden Träger 72 auf, der zur Abstützung des Erntevorsatzes 74 an der Befestigungseinrichtung 54 dient.

Der Erntevorsatz 74 ist ein an sich bekannter Mähvorsatz, der zwischen zwei Seitenwänden 82 eine Schneideinrichtung 76 in der Form eines sich hin- und herbewegenden Mähers aufweist, die Erntegut von auf dem Erdboden verbleibenden Stoppeln trennt. Eine Haspel 80 ist oberhalb und vor der Schneideinrichtung 76 angeordnet, um das Erntegut über die Schneideinrichtung 76 zu drücken, und es nach hinten zu einer Transporteinrichtung in Form einer Förderschnecke 78 zu drücken. Die Förderschnecke 78 transportiert das geerntete Gut zur Mitte des Erntevorsatzes 74, an der es von der ersten Fördereinrichtung 66 übernommen wird, die im Gehäuse 62 des Einzugszusammenbaus 38 angeordnet ist, der in der Regel schmaler als der Erntevorsatz 74 ist.

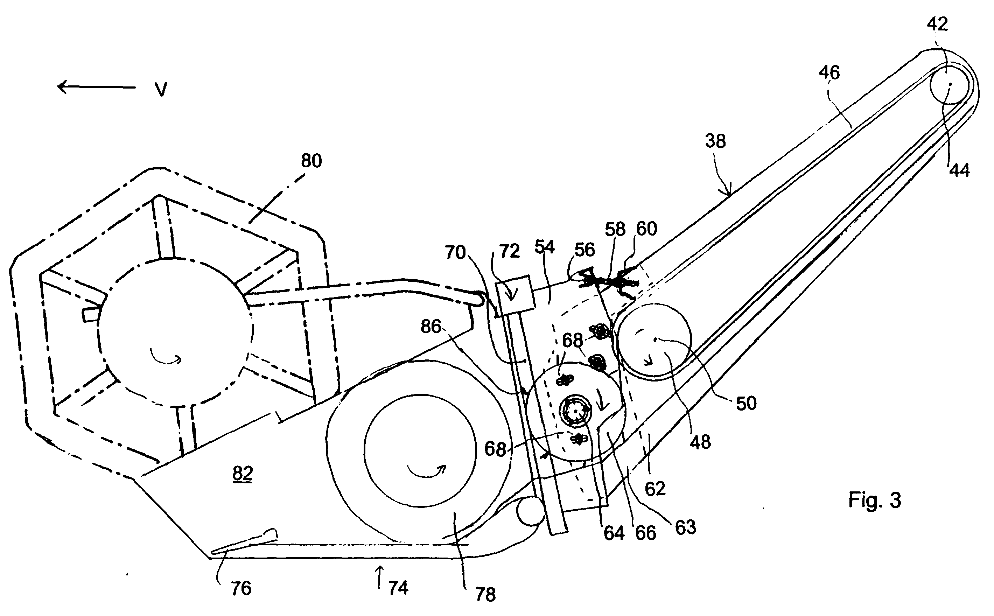

In Figur 3 ist die erste Fördereinrichtung 66 eine oberschlächtig wirkende Transportwalze, die im Uhrzeigersinn angetrieben ist. Sie ist mit Paddeln 86 ausgestattet, die geringfügig entgegen der Drehrichtung geneigt sind. Außerdem weist der Fördererzusammenbau der Figur 3 zwei Teile auf: das Gehäuse 62, und ein separates Modul 63, das an der Frontseite des Gehäuses 62 befestigt, beispielsweise angeflanscht ist. Das Gehäuse 62 enthält in an sich bekannter Weise den Kettenförderer mit der Förderkette 46 als zweite Fördereinrichtung. In dem Modul 63 ist die erste Fördereinrichtung 66 gelagert, und auch die Befestigungseinrichtung 54 ist an dem Modul 63 schwenkbar gelagert. Die Schwenkachse der Befestigungseinrichtung 54 ist ebenfalls mit der Achse 64 der ersten Fördereinrichtung 66 koaxial. Das Modul 63 ist so gestaltet wie der Frontbereich des einteiligen Fördererzusammenbaus der Figur 2. Es kann auch an bereits bekannten Fördererzusammenbauten montiert werden.

Im Ergebnis wird das Erntegut durch die Koaxialität der Schwenkachse der Befestigungseinrichtung 54 und der Achse 64 der ersten Fördereinrichtung 66 bei beliebigen Schwenkwinkeln optimal vom Erntevorsatz in die Erntemaschine 10 transportiert.

## Patentansprüche

1. Fördererzusammenbau (38), mit einer ersten Fördereinrichtung (66) zum Transportieren von Erntegut, die eine horizontal und quer zu einer Förderrichtung verlaufende Achse aufweist, einer stromabwärts der ersten Fördereinrichtung (66) angeordneten zweiten Fördereinrichtung, und einer Befestigungseinrichtung (54) zur Anbringung eines Erntevorsatzes (74), die um eine wenigstens näherungsweise koaxial zur Achse (64) der ersten Fördereinrichtung (66) verlaufende Achse schwenkbar am Fördererzusammenbau (38) befestigt ist.

2. Fördererzusammenbau (38) nach Anspruch 1, wobei die Befestigungseinrichtung (54) auf der Achse (64) bzw. einer Lagerung der Achse (64) der ersten Fördereinrichtung (66) gelagert ist.

3. Fördererzusammenbau (38) nach Anspruch 2, wobei die Achse (64) der ersten Fördereinrichtung (66) an einer Wand eines Gehäuses (62) des Fördererzusammenbaus (38) gelagert ist, und die Befestigungseinrichtung (54) bezüglich des Fördererzusammenbaus (38) auf der Innenseite oder der Außenseite der Wand an der Achse (64) gelagert ist.

4. Fördererzusammenbau (38) nach einem der Ansprüche 1 bis 3, wobei die Achse (64) der ersten Fördereinrichtung (66) unverschiebbar an einem Gehäuse (62) des Fördererzusammenbaus (38) gelagert ist.

5. Fördererzusammenbau (38) nach einem der Ansprüche 1 bis 4, wobei die zweite Fördereinrichtung eine Förderkette (46) umfaßt, die um eine erste Walze (42) und eine zweite Walze (48) umläuft, von denen wenigstens eine antreibbar ist.

6. Fördererzusammenbau (38) nach einem der Ansprüche 1 bis 5, wobei die erste Fördereinrichtung (66) eine rotativ angetriebene Walze ist, die oberschlächtig oder unterschlächtig fördert.

7. Fördererzusammenbau (38) nach Anspruch 6, wobei die erste Fördereinrichtung (66) eine Walze mit Paddeln (84, 86) ist.

8. Fördererzusammenbau (38) nach einem der Ansprüche 1 bis 7, wobei die Befestigungseinrichtung (54) durch Bolzen, die in Schlitzen (68) geführt sind, an einem Gehäuse (62) des Fördererzusammenbaus (38) abgestützt ist.

9. Fördererzusammenbau (38) nach Anspruch 8, wobei die Schlitze (68) in der Befestigungseinrichtung (54) angeordnet sind, und die Bolzen mit einem Gehäuse (62) des Fördererzusammenbaus (38) verbunden sind.

10. Fördererzusammenbau (38) nach einem der vorhergehenden Ansprüche, wobei der Schwenkwinkel der Befestigungseinrichtung (54) durch einen Stellmotor oder durch einen Schraubbolzen (58), der einenends mit der Befestigungseinrichtung (54) oder dem Gehäuse (62) des Fördererzusammenbaus (38) und anderen Endes über eine Mutter mit dem Gehäuse (62) oder der Befestigungseinrichtung (54) verbunden ist, festgelegt wird.

11. Fördererzusammenbau (38) nach einem der vorhergehenden Ansprüche, der ein einteiliges oder zweiteiliges Gehäuse (62) aufweist, wobei das zweiteilige Gehäuse ein Modul (63) umfaßt, das die erste Fördereinrichtung (66) enthält und an dem die Befestigungseinrichtung (54) schwenkbar gelagert ist.

12. Fördererzusammenbau (38) nach einem der vorhergehenden Ansprüche, mit einem an der Befestigungseinrichtung (54) befestigten Erntevorsatz (38), insbesondere einem Mähvorsatz oder einem Maispflücker oder einem Mähhäcksler.

13. Kombination aus einer Erntemaschine, insbesondere einem Mähdrescher (10) und einem Fördererzusammenbau (38) nach einem der vorhergehenden Ansprüche.

14. Modul (63) zur Anbringung zwischen einem einen Förderer enthaltenden Fördererzusammenbau (38) und einem Erntevorsatz (74), mit einer ersten Fördereinrichtung (66), und einer Befestigungseinrichtung (54) zur Anbringung des Erntevorsatzes (74), wobei die Befestigungseinrichtung (54) um eine Achse schwenkbar gelagert ist, die zur Achse (64) der Fördereinrichtung (66) wenigstens näherungsweise koaxial ist.
